# EUROPEAN PATENT APPLICATION

(11) **EP 4 703 220 A1**
(43) Date of publication of application: **04.03.2026**
(21) Application number: 24196964.1
(22) Date of filing: 28.08.2024
(51) Int. Cl.: B60T 13/68

(54) **PNEUMATIC SYSTEM FOR A VEHICLE**

(71) Applicant: Volvo Truck Corporation, 405 08 Göteborg (SE)
(72) Inventor: DUSSAPT, Fabrice, 69003 LYON (FR); BEBON, Hugo, 69800 ST PRIEST (FR)
(74) Representative: Ström & Gulliksson AB

(57) **Abstract**

Present disclosure relates to a pneumatic system for a vehicle comprising an air compressor and a pressure circuit in fluid communication with the air compressor, the pressure circuit comprising a lower pressure branch and a high pressure branch in fluid communication with each other. The pneumatic system further comprises a controllable pressure limiting valve separating the low pressure branch from the high pressure branch.

## Description

### TECHNICAL FIELD

The disclosure relates generally to pneumatic system. In particular aspects, the disclosure relates to a pneumatic system for a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Commercial vehicles are generally equipped with low-pressure equipment, such as trailer, park brake, pneumatic auxiliaries and others, operating with compressed air at pressures in a low-pressure range, especially between 1 bars and 8.5 bars. They are also equipped with high-pressure equipment, such as suspensions and service brake or others, operating with compressed air at pressures in a high-pressure range, especially between 9 bars and 12.5 bars.

The low-pressure and high-pressure equipment are parts of a pneumatic system further including an air management system which commonly includes an air compressor delivering compressed air, a low-pressure circuit connected to the air compressor and configured to store and supply compressed air within the low-pressure range, the low-pressure equipment being connected to the low-pressure circuit, a high-pressure circuit connected to the air compressor and configured to store and supply compressed air within the high-pressure range, the high-pressure equipment being connected to the high-pressure circuit.

The pneumatic system further comprises a braking system operating with compressed air. In particular, in most of the braking situations, the braking system has a usual braking operation in which it operates with compressed air at pressures in the low-pressure range, especially below 7 bars. In some braking situations, the braking system has an emergency braking operation in which it operates with compressed air at pressures in the high-pressure range, especially up to 10 bars.

In known air management system, the braking system is connected to the high-pressure circuit where compressed air is stored in the high-pressure range. As long as the braking system is used, compressed air in the high-pressure circuit is consumed and the air compressor needs to be operated so as to deliver compressed air within the high-pressure range.

However, such operation of the compressor at high-pressure lowers the compressor efficiency due to higher torque and higher energy consumption, i.e. lower volumetric efficiency and lower air flow.

Further, such a system may be susceptible to leakage, which when present in the high-pressure circuit may pose a risk if for example emergency braking will be required.

### SUMMARY

According to a first aspect of the disclosure a pneumatic system for a vehicle is provided. The pneumatic system comprises an air compressor and a pressure circuit in fluid communication with the air compressor. The pressure circuit comprises a lower pressure branch and a high pressure branch in fluid communication with each other. The pneumatic system further comprises a controllable pressure limiting valve separating the low pressure branch from the high pressure branch and configured to limit the pressure level in the low pressure branch to an initial low pressure level in a normal operational mode, and a control valve arrangement arranged in the high pressure branch. The pneumatic system responsive to a leakage in a downstream portion of the high pressure branch is configured to operate in an alternate operational mode wherein the control valve arrangement is configured to close off said downstream portion of the high pressure branch from the air compressor and the controllable pressure limiting valve is configured to cause the pressure level in the low pressure branch to increase to a pressure level higher than the initial low pressure level. The first aspect of the disclosure may seek to achieve an energy efficient pneumatic system which can provide high pressure even in the event of a leakage. A technical benefit may include that the low pressure branch may be utilized to provide the high pressure required for the operation of high pressure air consumers of the vehicle in cases where there is a leakage in the high pressure branch, thereby still allowing for energy efficiency in the normal operational mode while allowing for safe operation of the vehicle.

Optionally in some examples, including in at least one preferred example, the pneumatic system may further comprise a pneumatic control system configured to cause control of the pneumatic system, wherein the pneumatic control system may be configured to obtain leakage data indicating leakage in the downstream portion of the high pressure branch and responsive to the leakage data indicating leakage in said downstream portion cause the pneumatic system to operate in the alternate operational mode. A technical benefit may include that the pneumatic control system allows for a more precise and reliable manner of identifying and/or acting on a leak in the high pressure branch.

Optionally in some examples, including in at least one preferred example, the pneumatic system may be further configured to in the normal operational mode cause the high pressure branch to operate at an initial high pressure level and wherein the initial low pressure level is lower than the initial high pressure level.

Optionally in some examples, including in at least one preferred example, the pneumatic control system may be further configured to obtain operational data associated with the pressure and/or flow in the high pressure branch, and based on the operational data and responsive to the leakage data indicating leakage in the high pressure branch cause control of the air compressor such that the pressure in the low pressure branch reaches the initial high pressure level in the alternate operational mode. A technical benefit may include that the low pressure branch may reliably operate at a sufficiently high enough pressure level in the alternate operational mode.

Optionally in some examples, including in at least one preferred example, the pressure circuit may further comprise one or more low pressure lines arranged downstream from the low pressure branch each being configured to be in fluid communication with a low pressure air consumer such as a vehicle auxiliary, a trailer, a gearbox or a parking brake system, to provide air pressure to said low pressure air consumer. A technical benefit may include that the low pressure branch may operate equipment not requiring high pressure in a more energy efficient manner.

Optionally in some examples, including in at least one preferred example, the pneumatic system may further comprise at least one low pressure line pressure limiting valve separating the one or more low pressure lines from the low pressure branch and configured to limit the pressure level in the one or more low pressure lines relative to the low pressure branch. A technical benefit may include that the low pressure line pressure limiting valve may cause the low pressure lines to more reliably operate at a lower pressure level, thereby improving the energy efficiency of the pneumatic system.

Optionally in some examples, including in at least one preferred example, the low pressure branch may comprise one or more pressure supply sections each fluidly connected to a low pressure branch tank for storing the air at the pressure level at which the low pressure branch operates. A technical benefit may include that the energy efficiency of the pneumatic system may be improved as it may enable the air compressor to be less utilized in order to maintain the desired pressure level in the low pressure branch.

Optionally in some examples, including in at least one preferred example, the controllable pressure limiting valve may be pneumatically operable. A technical benefit may include that a more energy efficient pneumatic system may be achieved since such a pressure limiting valve does not require electric power to be operated.

Optionally in some examples, including in at least one preferred example, the pneumatic system may further comprise a high pressure air consumer such as an air suspension system of the vehicle and/or an emergency braking function of a pneumatic braking system of the vehicle, wherein the downstream portion of the high pressure branch may be fluidly connected to said high pressure air consumer to provide air pressure to said high pressure air consumer. A technical benefit may include that the only the consumers requiring high pressure to be operated is provided with such high pressure while other consumers may be provided a lower pressure, thereby improving the energy efficiency of the pneumatic system.

Optionally in some examples, including in at least one preferred example, the downstream portion of the high pressure branch may comprise a first section of said high pressure branch arranged upstream from the controllable pressure limiting valve.

Optionally in some examples, including in at least one preferred example, the high pressure branch may further comprise a second section arranged upstream from the controllable pressure limiting valve and wherein the control valve arrangement may be configured to close off the first section from the air compressor and fluidly connect the second section to a pneumatic control line fluidly connected to the controllable pressure limiting valve for sending a pneumatic signal to said pressure limiting valve to cause the pressure level in the low pressure branch to increase to a pressure level higher than the initial low pressure level in the alternate operational mode. A technical benefit may include that the switch between the normal operational mode and the alternate operational mode may be performed in a rapid and reliable manner.

Optionally in some examples, including in at least one preferred example, an exhaust of the pneumatic system may be arranged downstream of the control valve arrangement and wherein said control valve arrangement may be configured to selectively fluidly connect the pneumatic control line to said exhaust. A technical benefit may include that utilizing the exhaust may allow for a less complex pneumatic system.

Optionally in some examples, including in at least one preferred example, the control valve arrangement may be configured to connect the pneumatic control line to an atmospheric pressure via the exhaust in the normal operational mode and close off the pneumatic control line from the exhaust and connect the second section to the pneumatic control line such that said second section and pneumatic control line may form a closed circuit in the alternate operational mode.

Optionally in some examples, including in at least one preferred example, the control valve arrangement may comprise a high pressure branch overflow valve configured to close to seal off the downstream portion of the high pressure branch responsive to the pressure in said downstream portion falling below an overflow pressure limit.

Optionally in some examples, including in at least one preferred example, the control valve arrangement may comprise a control valve configured to connect the pneumatic control line to an atmospheric pressure via the exhaust in the normal operational mode and close off the pneumatic control line from the exhaust and connect the second section to the pneumatic control line such that said second section and pneumatic control line may form a closed circuit in the alternate operational mode, wherein the control valve may be operatively connected to the pneumatic control system and the pneumatic control system may be configured to cause control of said control valve. A technical benefit may include that the alternate operational mode and the normal operational mode may be achieved in a simple and non-complex manner.

Optionally in some examples, including in at least one preferred example, the pneumatic control system may be configured to obtain leakage data from one or more pressure and/or flow sensors. A technical benefit may include that the sensors may allow for a more reliable identification of a leak in the high pressure branch.

Optionally in some examples, including in at least one preferred example, the pneumatic system may further comprise a high pressure branch tank for storing pressurized air for emergency braking, wherein the downstream portion of the high pressure branch may be fluidly connected to the high pressure branch tank to provide air pressure to said high pressure branch tank and wherein the low pressure branch may comprise one or more pressure supply sections each fluidly connected to a low pressure branch tank for storing the air at the pressure level at which the low pressure branch operates, and wherein the high pressure branch tank and the one or more low pressure branch tank may be configured to be fluidly connected to a pneumatic braking system of the vehicle to supply air for the operation of said pneumatic braking system. A technical benefit may include that the safety of the vehicle may be improved due to the pneumatic system being able to provide air at a sufficiently high pressure to the braking system even in the event of a leak in the high pressure branch.

Optionally in some examples, including in at least one preferred example, the pneumatic system may further comprise a booster valve arranged downstream of the high pressure branch tank and configured to selectively enable fluid communication between the high pressure branch tank and the pneumatic braking system, wherein the booster valve may be configured to be operatively connected to a vehicle control system for controlling said booster valve to selectively enable fluid communication between the high pressure branch tank and the pneumatic braking system for emergency braking of the vehicle. A technical benefit may include that the pneumatic system may provide the required pressure for an emergency braking operation without requiring a complex system and/or components.

Optionally in some examples, including in at least one preferred example, the pneumatic control system may be configured to be operatively connected to the vehicle control system and wherein the pneumatic control system may be configured to obtain operational data associated with the operation of the booster valve from said vehicle control system and responsive to said operational data indicating a failure in the booster valve, the pneumatic control system may be configured to cause the pneumatic system to operate in a booster failure mode wherein the controllable pressure limiting valve may be configured to cause the pressure level in the low pressure branch to increase to a pressure level higher than the initial low pressure level. A technical benefit may include that the safety of the vehicle may be improved due to the pneumatic system being able to adapt to a failure in the booster valve.

According to a second aspect of the disclosure, a vehicle is provided. The vehicle comprises a pneumatic system of any of the examples described herein. The second aspect of the disclosure may seek to achieve a more energy efficient and more safe vehicle. A technical benefit may include that the low pressure branch may be utilized to provide the high pressure required for the operation of high pressure air consumers of the vehicle in cases where there is a leakage in the high pressure branch, thereby still allowing for energy efficiency in the normal operational mode while allowing for safe operation of the vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2A** is a schematic block view of a pneumatic system according to an example.
**FIG. 2B** is a schematic flow chart of the operation of the pneumatic system depicted in **FIG. 2A** according to an example.
**FIG. 2C** is a schematic flow cart of the operation of the air compressor of the pneumatic system depicted in **FIG. 2A-B**according to an example.
**FIG. 3** is a schematic diagram of a pneumatic system according to an example operating in a normal operational mode.
**FIG. 4** is a schematic diagram of a pneumatic system according to the example of **FIG. 3** operating in an alternate operational mode.
**FIG. 5A** depicts a pressure limiting valve of a pneumatic system according to an example.
**FIG. 5B** depicts a cross-section view of a pressure limiting valve in a first state according to an example.
**FIG. 5C** depicts a cross-section view of the pressure limiting valve of **FIG. 5B** in a second state.
**FIG. 6** is a schematic view of aspects of a pneumatic system according to an example.
**FIG. 7** is a schematic flow cart of the operation of the air compressor of the pneumatic system depicted in **FIG. 6** according to an example.
**FIG. 8** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Vehicles commonly comprise a number of components driven and operated by air pressure. To enable operation of such components, the components are usually comprised in a pneumatic system. Different types of components and different type of operations of components may require different air pressure to be functional. Notably, a high air pressure is negative from an energy efficiency standpoint due to being associated with higher torques and higher energy consumption. Further, an air compressor, e.g. the component of the pneumatic system providing the compressed air, also generally has a lower efficiency when operating to provide a higher pressure.

To address the energy inefficiency associated with high air pressures in a pneumatic system, pneumatic systems has in some cases been divided into sub-circuits operating at different pressures to make sure that each component is provided with a pressure suitable for its operation.

However, in a pneumatic system with sub-circuits operating at different pressures problems may arise as a consequence of a leakage, particularly in a sub-circuit operating at a high pressure. Due to the high pressure, the amount of air leaking out will be higher. Further, it may pose a safety risk for the vehicle due to the components and functions being operated by the high pressure sub-circuits such as suspension systems or emergency braking functions etc. often are important for the overall safety of the vehicle.

The present disclosure may serve to at least partially address the above shortcomings.

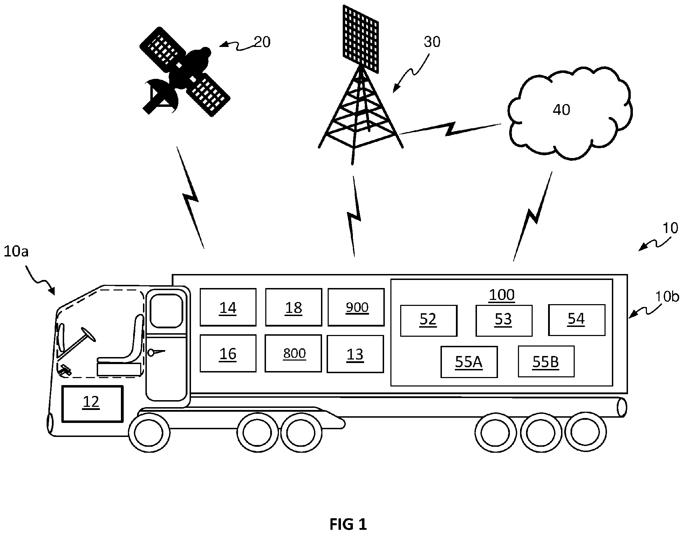

**FIG. 1** is an exemplary schematic side view of a heavy-duty vehicle **10** (hereinafter referred to as vehicle **10**) compatible with the teachings of the present disclosure. The vehicle **10** comprises a tractor unit **10a** which is arranged to tow a trailer **10b.** In other examples, other vehicles may be employed, e.g., trucks, buses, and construction equipment. The vehicle **10** comprises all vehicle units and associated functionality to operate as expected, such as a powertrain, chassis, and various control systems. Although components and systems described herein are schematically depicted in the tractor unit **10a** or the trailer **10b** in **FIG. 1** for exemplary purposes, the components may be arranged at any suitable part of the vehicle **10** and/or may be comprised in both the tractor unit **10a** and the trailer **10b.**

The vehicle **10** comprises one or more propulsion sources **12.** The propulsion source **12** may be any suitable propulsion source **12** exemplified by, but not limited to, one or more or a combination of an electrical motor, a combustion engine such as a diesel, gas or gasoline powered engine. The vehicle **10** further comprises an energy source **13** suitable for providing energy for the propulsion source **12.** That is to say, if the propulsion source **12** is an electrical motor, a suitable energy source **13** would be a battery pack or a fuel cell.

The vehicle **10** may further comprise sensor circuitry **16** arranged to detect, measure, sense or otherwise obtain data relevant for operation of the vehicle **10** including devices and systems connected to the vehicle **10.** The sensor circuit **16** may comprise one or more of an accelerometer, a gyroscope, a wheel Speed Sensor, an ABS sensor, a throttle position sensor, a fuel level sensor, a temperature Sensor, a pressure sensor, a rain sensor, a light sensor, proximity sensor, a lane departure warning sensor, a blind spot detection sensor, a TPMS sensor etc. Operational data relevant for operation of the vehicle **10** may include, but is not limited to, one or more of a speed of the vehicle **10,** a weight of the vehicle **10,** an inclination of the vehicle **10,** a status of the energy source **13** of the vehicle **10** (state of charge, fuel level etc.), a current speed limit of a current road travelled by the vehicle **10,** air-brake pressure etc. The vehicle **10** may further comprise communications circuitry **18** configured to receive and/or send communication. The communications circuitry **18** may be configured to enable the vehicle **10** to communicate with one or more external devices or systems such as a cloud server **40.** The communication with the external devices or systems may be directly or via a communications interface such as a cellular communications interface **30,** such as a radio base station. The cloud server **40** may be any suitable cloud server exemplified by, but not limited to, Amazon Web Services (AWS), Microsoft Azure, Google Cloud Platform (GCP), IBM Cloud, Oracle Cloud Infrastructure (OCI), DigitalOcean, Vultr, Linode, Alibaba Cloud, Rackspace etc. The communications interface may be a wireless communications interface exemplified by, but not limited to, Wi-Fi, Bluetooth, Zigbee, Z-Wave, LoRa, Sigfox, 2G (GSM, CDMA), 3G (UMTS, CDMA2000), 4G (LTE), 5G (NR) etc. The communication circuitry **18** may, additionally or alternatively, be configured to enable the vehicle **10** to be operatively connected to a Global Navigation Satellite System (GNSS) **20** exemplified by, but not limited to, global positioning system (GPS), Globalnaya Navigatsionnaya Sputnikovaya Sistema (GLONASS), Galileo, BeiDou Navigation Satellite System, Navigation with Indian Constellation (NavIC) etc. The vehicle **10** may be configured to utilize data obtain from the GNSS **20** to determine a geographical location of the vehicle **10.**

The vehicle **10** comprises a pneumatic system **100.** The pneumatic system **100** may provide air to a number of components of the vehicle **10.**

The vehicle **10** further comprises a braking system **900,** preferably a pneumatic braking system **900.** The pneumatic braking system **900** may operate with compressed air, belonging to the pneumatic system **100.** In most of braking situations, the pneumatic braking system **900** may have a normal braking function and/or a parking braking function in which it operates with compressed air at pressures in the low-pressure range, especially below 7 bars. In some braking situations, the pneumatic braking system **900** has an emergency braking function in which it operates with compressed air at pressures in the high-pressure range, especially up to 10 bars.

The pneumatic system **100** may comprise one or more high pressure air consumer 55 and/or one or more low pressure air consumer **52-54.**

The one or more low pressure air consumers **52-54** may be considered comprises low-pressure equipment. The low pressure air consumers may include any one or more of a vehicle auxiliary e.g. a pneumatic auxiliary operating with compressed air, the trailer **10b,** a gearbox, a parking brake system, e.g. a parking brake system of the pneumatic brake system **900,** a normal braking function of the pneumatic brake system **900**

The one or more low pressure air consumers **52-54** may operate with compressed air at pressures in a low-pressure range, especially between 1 bars and 8.5 bars.

For example, a normal braking function, e.g. normal usage of the pneumatic braking system **900,** may cause the braking system **900** to operate at a pressure from 1 bar to 5 bar. A parking brake system of the pneumatic braking system **900** may be operate at a pressure of up to 8.5 bar. A trailer may operate at a pressure of up to 8.5 bar. A vehicle auxiliary may operate at a pressure of up to 8.5 bar.

The one or more high pressure air consumers may be considered high pressure equipment. The one or more high pressure air consumer **55A-B,** may include any one of an emergency braking function, e.g. an emergency braking function of the pneumatic braking system **900** and an air suspension system of the vehicle **10.**

The one or more high pressure air consumers **55A-B** may operate with compressed air at pressures in a high-pressure range, especially between 9 bars and 12.5 bars.

The pneumatic braking system **900** may be connected to both low-pressure and high-pressure fluid circuitry in order to provide air at both in the low pressure range and in the high pressure range to the pneumatic braking system **900.**

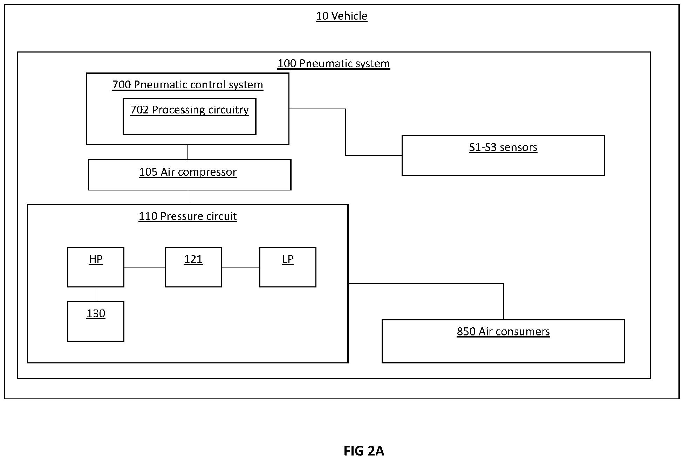

**FIG. 2A** a schematic block diagram of a pneumatic system **100** for the vehicle **10** according to an example.

The pneumatic system **100** comprises an air compressor **105** and a pressure circuit **110.** The pressure circuit **100** is in fluid communication with the air compressor **105.** The pressure circuit **100** comprises a lower pressure branch **LP** and a high pressure branch **HP** being in fluid communication with each other.

The pneumatic system **100** comprises a pressure limiting valve **121.** The pressure limiting valve **121** separates the low pressure branch **LP** from the high pressure branch **HP.** The controllable pressure limiting valve **121** is configured to, in the normal operational mode, limit the pressure level in the low pressure branch **LP** to an initial low pressure level.

The pneumatic system **100** comprises a control valve arrangement **130.** The control valve arrangement **130** is arranged in the high pressure branch **HP.** The pneumatic system **100** is configured to operate in the alternate operational mode in response to a downstream portion of the high pressure branch **HP.** In the alternate operational mode, the control valve arrangement **130** is configured to close off the downstream portion of the high pressure branch **HP** from the air compressor **105.** In the alternate operational mode, the controllable pressure limiting valve **121** is configured to cause the pressure level in the low pressure branch **LP** to increase to a pressure level higher than the initial low pressure level.

In the depicted example, the pressure circuit **110** is fluidly connected to, e.g. configured to distribute air to, air consumers **850.** The air consumers **850** may be any type of equipment driven by and/or operated by the air provided via the pressure circuit **110.**

In the depicted example, the pneumatic system **100** may be controlled by a pneumatic control system **700.** The pneumatic system **100** may comprise the pneumatic control system **700.** The pneumatic control system **700** may be configured to cause control of the pneumatic system **100.** The pneumatic control system **700** may comprise processing circuitry **702** configured to control the pneumatic system **100.** In one example, the pneumatic control system **700,** e.g. the processing circuitry **702,** may be configured to control the pneumatic system **100.** The pneumatic control system **700,** e.g. the processing circuitry **702,** is configured to obtain leakage data indicating leakage in the downstream portion of the high pressure branch **HP.** Responsive to the leakage data indicating leakage in the downstream portion, the pneumatic control system **700,** e.g. the processing circuitry **702,** is configured to cause the pneumatic system **100** to operate in the alternate operational mode, e.g. switch from operating the normal operational mode to the alternate operational mode.

In the normal operational mode, the pneumatic system **100** may be configured to cause the high pressure branch **HP** to operate at an initial high pressure level. The initial low pressure level may be lower than the initial high pressure level.

The pneumatic control system **700,** e.g. the processing circuitry **702,** may be configured to operatively connected to the air compressor **105.** The pneumatic control system **700,** e.g. the processing circuitry **702,** may be configured to control the air compressor **105.**

The pneumatic control system **700,** e.g. the processing circuitry **702,** may be configured to cause the pneumatic system **100** to switch from operating in the normal operational mode to the alternate operational mode in response to the leakage data indicating a leakage in the downstream portion of the high pressure branch **HP.**

The switching from the normal operational mode to the alternate operational mode may comprise the pneumatic control system **700,** e.g. the processing circuitry **702,** causing control of the control valve arrangement **130.** The control valve arrangement **130** may thus be operatively connected to said pneumatic control system **700.** The pneumatic control system **700,** e.g. the processing circuitry **702,** may be configured to control said control valve arrangement **130.**

Further referencing **FIG. 2A****,** the pneumatic control system **700,** e.g. the processing circuitry **702,** may be configured to obtain operational data associated with the pressure and/or flow in the high pressure branch **HP.** The pneumatic control system **700,** e.g. the processing circuitry **702,** may be further configured to cause control of the air compressor **105** such that pressure in the low pressure branch **LP** reaches the initial high pressure level in the alternate operational mode based on the operational data and in response to the leakage data indicating leakage in the high pressure branch **HP.** The operational data may be considered flow and/or pressure data.

The pneumatic control system **700** may be configured to obtain leakage data from one or more pressure and/or flow sensors **S1, S2, S3.**

The pneumatic control system **700,** e.g. the processing circuitry **702,** may be configured to operatively connected to the air compressor **105.** The pneumatic control system **700,** e.g. the processing circuitry **702,** may be configured to control the air compressor **105.**

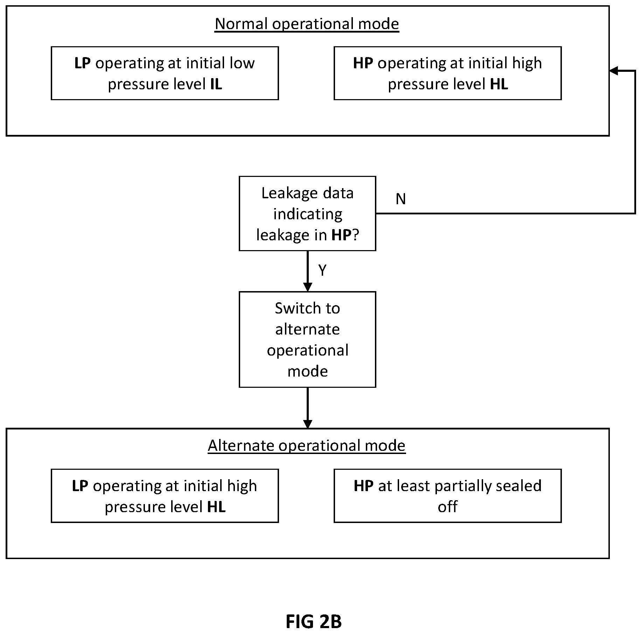

**FIG. 2B** depicts a schematic flow chart of the operation of the pneumatic system **100** according to an example.

Initially, the pneumatic system **100** may operate in the normal operational mode. While operating in the normal operational mode, the leakage data may be continuously monitored by the pneumatic control system **700,** e.g. the processing circuitry **702.** While the leakage data provides no indication of a leakage in the downstream portion of the high pressure branch **HP,** the pneumatic system **100** may continue to operate in the normal operational mode.

In the normal operational mode, the low pressure branch **LP** may operate at the initial low pressure level **IL.** In the normal operational mode, the high pressure branch **HP** may operate at the initial high pressure level **HL.** The initial high pressure level **HL** may be higher than the initial low pressure level **IL.** Although referenced herein as pressure level, the pressure in the low pressure branch **LP** and the high pressure branch **HP** may vary while operating at the initial low pressure level **IL** and the initial high pressure level **HL.** The initial low pressure level **IL** and the initial high pressure level **HL** may thus be seen as operating regions or intervals.

In the event of the leakage data indicating that a leakage is present in the downstream portion of the high pressure branch **HP,** the pneumatic system **100** may switch to operating to the alternate operational mode. The pneumatic control system **700,** e.g. the processing circuitry **702,** may be configured to cause the pneumatic control system **700** to switch from the normal operational mode to the alternate operational mode.

The pneumatic control system **700,** e.g. the processing circuitry **702,** may be configured to assess the leakage data. The pneumatic control system **700,** e.g. the processing circuitry **702,** may be configured to determine that the leakage data indicates a leakage in the downstream portion of the high pressure branch **HP.**

The pneumatic control system **700,** e.g. the processing circuitry **702,** may be configured to, based on the leakage data, determine that a change in the flow and/or pressure is outside of a predetermined interval. The pneumatic control system **700,** e.g. the processing circuitry **702,** may thus be configured to obtain leakage data associated with the flow and/or pressure in high pressure branch **HP** from the one or more flow or pressure sensors **S1, S2, S3.** The leakage data may thus comprise pressure and/or flow measurements for the high pressure branch **HP.** The predetermined interval may be a maximum threshold. Thus, the pneumatic control system **700,** e.g. the processing circuitry **702,** may be configured to, based on the leakage data, determine that a change in flow and/or pressure exceeds a maximum gradient.

In one example, the pneumatic control system **700,** e.g. the processing circuitry **702,** may be configured to compare a first pressure or flow measurement in the high pressure branch **HP** at a first point in time and a second corresponding pressure or flow measurement in the high pressure branch **HP** at a second point in time. In response to the change between the first pressure or flow measurement and the second corresponding pressure or flow measurement being outside the determined interval, the pneumatic control system **700,** e.g. the processing circuitry **702,** may be configured to determine that the leakage data indicates a leakage in the downstream portion of the high pressure branch **HP.** In one example, the pneumatic control system **700,** e.g. the processing circuitry **702,** may be configured to determine that the leakage data indicates said leakage in response to the negative pressure gradient between the first and second pressure measurement exceeding a negative pressure gradient threshold.

Advantageously, the above determining may be performed based on pressure due to providing more accurate results.

Notably, the pressure and/or flow in the high pressure branch **HP** may vary depending on the operation of said high pressure branch **HP** and its components, e.g. consumers and tanks etc.. The pneumatic control system **700,** e.g. the processing circuitry **702,** may thus be configured to determine that the leakage data indicates a leakage in the downstream portion of the high pressure branch **HP** based on high pressure branch operational data. The high pressure branch operational data may be associated with the current operation of the high pressure branch. For example the high pressure branch operational data may be associated with the operation of the components of the high pressure branch **HP** such as for example the pneumatic braking system **900,** the air consumers **850,** tanks arranged in the high pressure branch **HP** (which will be described in further detail later on.

While operating in the alternate operational mode, the pressure level in the low pressure branch **LP** may be increased. The pneumatic control system **700,** e.g. the processing circuitry **702,** may be configured to cause the pressure level in the low pressure branch **LP** to increase. In one example, the pneumatic control system **700,** e.g. the processing circuitry **702,** may be configured to control the air compressor **105** to increase the pressure in said low pressure branch **LP.**

In one example, the pressure level in the low pressure branch **LP** may increase to a pressure higher than the initial low pressure level **IL.** In one example, the pressure level in the low pressure branch **LP** may be increase to reach the initial high pressure level **HL,** thereby enabling the low pressure branch **LP** to provide enough pressure to operate high pressure air consumers.

While operating in the alternate operational mode, the leak in the downstream portion may be sealed off from the remaining pressure circuit **110.** This may be performed by means of sealing off the downstream portion from the remaining pressure circuit **110.**

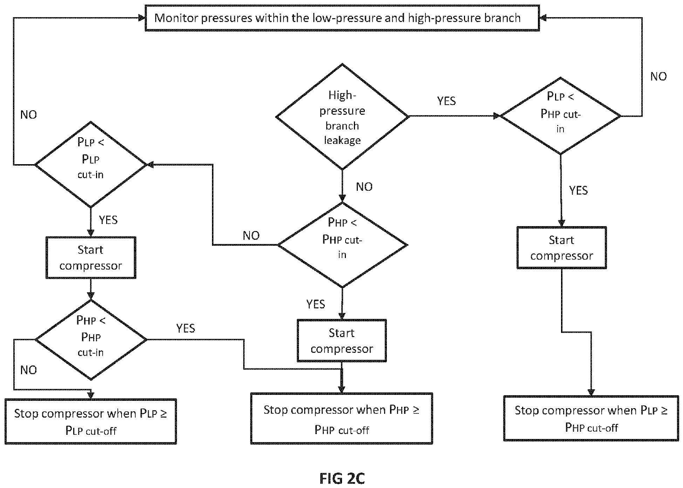

**FIG. 2C** depicts a schematic flow chart of the operation of the air compressor **105** according to an example.

As aforementioned the pneumatic control system **700,** e.g. the processing circuitry **702,** may be configured to obtain operational data associated with the pressure and/or flow in the high pressure branch **HP.** The operational data may also be associated with the pressure and/or flow in the low pressure branch **LP.** The operational data may be obtained from the one or more sensors **S1, S2, S3.** The operational data may be considered flow data and/or pressure data.

In the normal operational mode, the air compressor **105** may be configured to maintain a substantially constant pressure in the low pressure branch **LP** and in the high pressure branch **HP.** Accordingly, the air compressor **105** may in the normal operational mode be configured to maintain the low pressure branch **LP** at the initial low pressure level **IL** and the high pressure branch **HP** at the initial high pressure level **HL.** The pneumatic control system **700,** e.g. the processing circuitry **702,** may be configured to control the air compressor **105** to maintain the low pressure branch **LP** at the initial low pressure level **IL** and the high pressure branch **HP** at the initial high pressure level **HL.** In one example, the pneumatic control system **700,** e.g. the processing circuitry **702,** may be configured to control the air compressor **105** to maintain the low pressure branch **LP** at the initial low pressure level **IL** and the high pressure branch **HP** at the initial high pressure level **HL** based on the aforementioned operational data.

In the depicted example, the pneumatic control system **700** may be configured to monitor the pressure in the low pressure branch **LP** and the high pressure branch **HP,** e.g. by means of the one or more sensors **S1, S2, S3.**

If no leakage is detected, the pneumatic system **100** may continue to operate in the normal operational mode in accordance with the following.

To maintain the pressure in the low pressure branch **LP** and in the high pressure branch **HP,** the pressure in each branch may be compared to upper and lower threshold values to prompt the air compressor **105** to be started or shut down.

Upon the pressure **P_{HP}** in the high pressure branch **HP** being lower than a high pressure branch cut in pressure **P_{HP CUT-IN}**, the pneumatic control system **700,** e.g. the processing circuitry **702,** may be configured to start the air compressor **105.**

When the pressure **P_{HP}** in the high pressure branch **HP** exceeds a high pressure branch cut off pressure **P_{HP CUT-OFF}**, the pneumatic control system **700,** e.g. the processing circuitry **702,** may be configured to stop the air compressor **105.**

Responsive to the pressure **P_{HP}** in the high pressure branch **HP** being higher or at the high pressure branch cut in pressure **P_{HP CUT-IN}** and upon the pressure **P_{LP}** in the low pressure branch **LP** being lower than a low pressure branch cut in pressure **P_{LP CUT-IN}**, the pneumatic control system **700,** e.g. the processing circuitry **702,** may be configured to start the air compressor **105.**

The pneumatic control system **700,** e.g. the processing circuitry **702,** may be configured to stop the air compressor **105** based on the pressure **P_{HP}** in the high pressure branch **HP** being higher or lower than the high pressure branch cut in pressure **P**_{**HP CUT**-**IN**}.

In the event of the pressure **P_{HP}** in the high pressure branch **HP** being higher than the high pressure branch cut in pressure **P_{HP CUT-IN}**, the pneumatic control system **700,** e.g. the processing circuitry **702,** may be configured to stop the air compressor **105** in response to the pressure **P_{LP}** in the low pressure branch **LP** being higher than the low pressure branch cut off pressure **P_{LP CUT-OFF}**.

In the event of the pressure **P_{HP}** in the high pressure branch **HP** being lower than the high pressure branch cut in pressure **P_{HP CUT-IN}**, the pneumatic control system **700,** e.g. the processing circuitry **702,** may be configured to stop the air compressor **105** in response to the pressure **P_{HP}** in the high pressure branch **HP** being higher than or at the high pressure branch cut off pressure **P**_{**HP CUT**-**OFF**}.

If however a leak in the high pressure branch **HP** is detected, e.g. if the leakage data indicates a leakage in the downstream portion of the high pressure branch **HP** and the pneumatic system **100** operates in the alternate operational mode, the pneumatic control system **700,** e.g. the processing circuitry **702,** may be configured to start the air compressor **105** in response to the pressure **P_{LP}** in the low pressure branch **LP** being lower than the high pressure branch cut in pressure **P**_{**HP CUT**-**IN**}.

Upon the pressure in the **P_{LP}** in the low pressure branch **LP** exceeding or being at the high pressure branch cut off pressure **P_{HP CUT-OFF}**, the pneumatic control system **700,** e.g. the processing circuitry **702,** may be configured to stop the air compressor **105.**

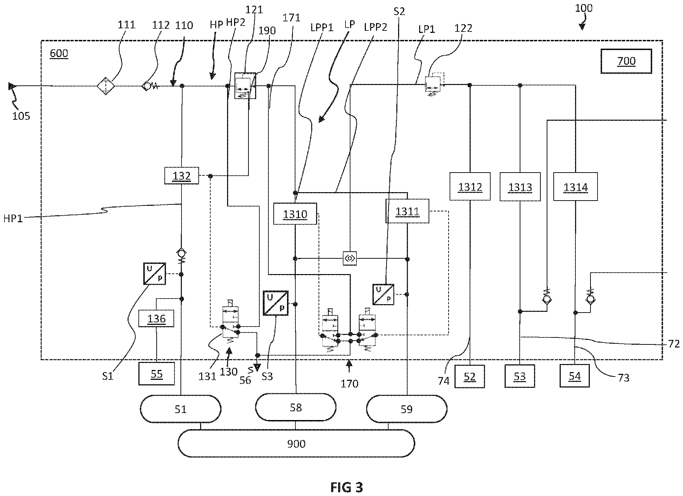

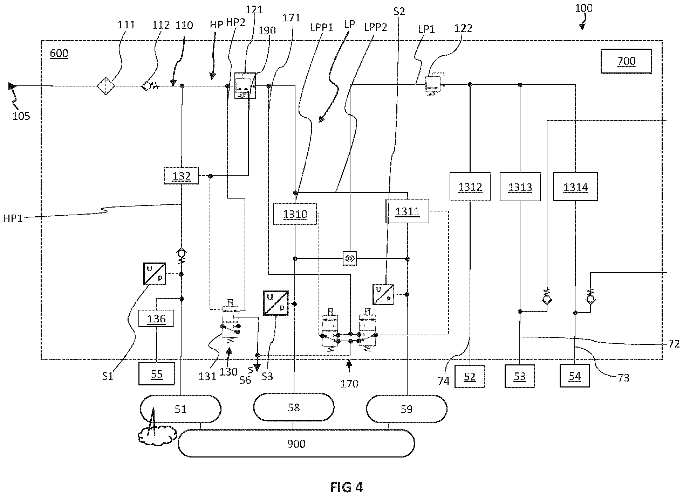

**FIG. 3-4** depicts the pneumatic system **100** according to an example in the normal operational mode and in the alternate operational mode, respectively. In **FIG. 3****,** the pneumatic system **100** operates in the normal operational mode and in **FIG. 4****,** the pneumatic system **100** operates in the alternate operational mode. Notably, the pneumatic system **100** of **FIG. 3-4** is to serve as an example of an implementation of the functionality of the pneumatic system **100** described with reference to **FIG. 1-2****,** other ways of implementing the functionality of the pneumatic system **100** may be envisioned.

It is further noted that the actions performed by the pneumatic control system **700** may be performed by means of the previously described processing circuitry **702** of said pneumatic control system **700.**

The air compressor **105,** the pressure circuit **110** and the associated valves, air driers etc. may together form a mechatronic air modulator **600** configured to provide pressure to air consumers, tanks etc.

The pneumatic system **100** comprises the air compressor **105** and the pressure circuit **110.** The pressure circuit **100** is in fluid communication with the air compressor **105.** The pressure circuit **100** comprises the lower pressure branch **LP** and the high pressure branch **HP** being in fluid communication with each other.

The air compressor **105** may be powered by an electric motor or a combustion engine, such as the propulsion source **12** of the vehicle **10.** The air compressor **105** may be configured to convert the torque provided by its power source into potential energy stored in compressed air. This compressed air may be utilized for powering and operating various the air consumers.by releasing the stored energy to perform work, such as moving pistons, rotating shafts, and generating force etc. The air compressor **105** may be any type of suitable and conventional air compressor such as a reciprocating air compressor, a rotary screw air compressor, a rotary vane air compressor or a scroll air compressor.

The pneumatic system **100** comprises the controllable pressure limiting valve **121.** The controllable pressure limiting valve **121** separates the low pressure branch **LP** from the high pressure branch **HP.** The controllable pressure limiting valve **121** is configured to, in the normal operational mode, limit the pressure level in the low pressure branch **LP** to the initial low pressure level **IL.**

The controllable pressure limiting valve **121** may be pneumatically operated. The operation of the controllable pressure limiting valve **121** may thus be controlled by means of pneumatic signals.

The pneumatic system **100** comprises the control valve arrangement **130.** The control valve arrangement **130** is arranged in the high pressure branch **HP.** The pneumatic system **100** is configured to operate in the alternate operational mode in response to a downstream portion of the high pressure branch **HP.** In the alternate operational mode, the control valve arrangement **130** is configured to close off the downstream portion of the high pressure branch **HP** from the air compressor **105.** In the alternate operational mode, the controllable pressure limiting valve **121** is configured to cause the pressure level in the low pressure branch **LP** to increase to a pressure level higher than the initial low pressure level **IL.**

In the depicted example, the pneumatic system **100** may be controlled by the pneumatic control system **700.** The pneumatic control system **700** may be configured to cause control of the pneumatic system **100.** In one example, the pneumatic control system **700** may be configured to control the pneumatic system **100.** The pneumatic control system **700** is configured to obtain leakage data indicating leakage in the downstream portion of the high pressure branch **HP.** Responsive to the leakage data indicating leakage in the downstream portion, the pneumatic control system **700** is configured to cause the pneumatic system **100** to operate in the alternate operational mode, e.g. switch from operating the normal operational mode to the alternate operational mode.

The control valve arrangement **130** may be controlled by means of the pneumatic control system **700.** The pneumatic control system **700** may control the control valve arrangement **130** based on the leakage data, .e.g the leakage data indicating leakage in the downstream portion.

The pressure circuit **110** may comprise one or more low pressure lines **72, 73, 74.** The one or more low pressure lines **72, 73, 74** may be arranged downstream from the low pressure branch **LP.** Each low pressure line **72, 73, 74** may be configured to be in fluid communication with a low pressure air consumer **52, 53, 54** to provide air pressure to the low pressure air consumer **52, 53, 54.** As aforementioned the low pressure air consumer **52, 53, 54** may for example be a vehicle auxiliary, a trailer, a gearbox or a parking brake system.

In the depicted example, the pneumatic circuit **110** comprises a plurality low pressure lines **72, 73, 74.** The low pressure lines **72, 73, 74** may be arranged in parallel. Each of the low pressure lines **72, 73, 74** may be in fluid communication with a low pressure air consumer **52, 53, 54.** In the depicted examples, the pressure circuit **110** comprises three low pressure lines **72, 73, 74** providing air pressure to three low pressure air consumers **52, 53, 54.**

Advantageously, a low pressure line overflow valve **1312, 1313, 1314** may be arranged in each low pressure line **72, 73, 74.** Each low pressure line overflow valve **1312, 1313, 1314** may be arranged upstream from one of the low pressure consumers **52, 53, 54.**

At least one pressure line pressure limiting valve **122** may separate the one or more low pressure lines **72, 73, 74** from the low pressure branch **LP.** The at least one low pressure limiting valve **122** may be configured to limit the pressure level in the one or more low pressure lines **72, 73, 74** relative to the low pressure branch **LP.** In the depicted example, a single pressure limiting valve **122** arranged upstream of the inlets of the low pressure lines **72, 73, 74,** e.g. before the air flow is branched out to the low pressure lines **72, 73, 74.** It may however be envisioned that one low pressure limiting valve **122** may be arranged at each low pressure line low pressure lines **72, 73, 74.** The at least one pressure limiting valve **122** maybe configured to limit the pressure level in the one or more low pressure lines **72, 73, 74** to the initial low pressure level **IL.**

The low pressure branch **LP** may comprise one or more pressure supply sections **LPP.** Each pressure supply section **LPP** may be fluidly connected to a low pressure branch tank **58, 59** for storing the air at the pressure level at which the low pressure branch **LP** operates.

As depicted in **FIG. 3-4****,** the pneumatic system **100** may comprise a high pressure air consumer **55.** As aforementioned, the high pressure air consumer **55** may for example be an air suspension system of the vehicle **1** and/or an emergency braking function of the pneumatic braking system **900** of the vehicle **1.** The downstream portion of the high pressure branch **HP** may fluidly connected to the high pressure air consumer **55** to provide air pressure to the high pressure air consumer 55.

As aforementioned, the pneumatic system **100** is operable to switch between from the normal operational mode to the alternate operational mode in response to a leakage in a downstream portion of the high pressure branch **HP.** In the depicted example, said downstream portion may comprise a first section **HP1** of the high pressure branch **HP.** The high pressure branch **HP** may be arranged upstream from the controllable pressure limiting valve **121.**

Further referencing **FIG. 3-4****,** the controllable pressure limiting valve **121** may be pneumatically operable. Thus, the controllable pressure limiting valve **121** may pneumatically controlled.

The high pressure branch **HP** may comprise a second section **HP2.** The second section **HP2** may be arranged upstream from the controllable pressure limiting valve **121.** The control valve arrangement **130** may be configured to close of the first section **HP1** from the air compressor **105.** The control valve arrangement **130** may be configured to fluidly connect the second section **HP2** to a pneumatic control line **190.** The pneumatic control line **190** may be fluidly connected to the controllable pressure limiting valve **121** for sending a pneumatic signal to the pressure limiting valve **121** to cause the pressure level in the low pressure branch **LP** to increase to pressure level higher than the initial low pressure level **IL** in the alternate operational mode.

In one example, the pneumatic system **100** may comprise a high pressure branch tank **51** for storing pressurized air for emergency braking. The downstream portion of the high pressure branch, e.g. the first section **HP1** of the high pressure branch **HP,** may be fluidly connected to the high pressure branch tank **51** to provide air pressure to the high pressure branch tank **51.**

Correspondingly, the low pressure branch **LP** may comprise one or more pressure supply sections **LPP.** Each pressure supply section **LPP** may be fluidly connected to a low pressure branch tank **58, 59** for storing the air at the pressure level at which the low pressure branch **LP** operates.

The high pressure branch tank **51** and/or the one or more low pressure branch tank **58, 59** may be configured to supply air for the operation of the pneumatic braking system **900.** In one example, the high pressure branch tank **51** may be configured to provide air for the operation of an emergency braking function of the pneumatic braking system **900.** In one example, the one or more low pressure branch tank **58, 59** may be configured to provide air for the operation of a normal and/or parking braking function of the pneumatic braking system **900.**

In the depicted example, the one or more pressure supply section **LPP** may comprise a first pressure supply section **LPP1** and a second pressure supply section **LPP2.** The first pressure supply section **LPP1** may be fluidly connected to a first low pressure branch tank **58.** The second pressure supply section **LPP2** may be fluidly connected to a second low pressure branch tank **59.**

The pneumatic system **100** may comprise an exhaust **56.** The exhaust **56** may be arranged downstream of the control valve arrangement **130.** The control valve arrangement **130** may be configured to selectively fluidly connect the pneumatic control line **190** to the exhaust **56.**

The control valve arrangement **130** may be configured to connect the pneumatic control line **190** to an atmospheric pressure via the exhaust **56** in the normal operational mode. The control valve arrangement **130** may be configured to connect the second section **HP2** to the pneumatic control line **190** such that the second section **HP2** and the pneumatic control line **190** form a closed circuit in the alternate operational mode.

As aforementioned, the pneumatic system **100** comprises a control valve arrangement **130.** In the example depicted in **FIG. 3-4****,** the control valve arrangement **130** is comprised of a plurality of valves providing the functionality of the control valve arrangement **130** it may however be envisioned that the functionality is provided by a single more complex valve. In said depicted example, the control valve arrangement **130** comprises two valves, but it may be envisioned that a larger number of less complex valves may be utilized to provide the functionality of the control valve arrangement **130.**

As shown in **FIG. 3-4****,** the control valve arrangement **130** may comprise a high pressure branch overflow valve **132.** The high pressure branch overflow valve **132** may be configured to seal off the downstream portion of the high pressure branch **HP,** e.g. the first section **HP1.** The high pressure branch overflow valve **132** may be configured to seal off the downstream portion in response to the pressure in the downstream portion falling below an overflow pressure limit.

The control valve arrangement **130** may comprise a control valve **131.** The control valve **131** may be configured to connect the pneumatic control line **190** to an atmospheric pressure via the exhaust **56** in the normal operational mode.

In the alternate operational mode, the control valve **131** may be configured to close off the pneumatic control line **190** from the exhaust **56** and connect the second section **HP2** to the pneumatic control line **190** such that the second section **HP2** and the pneumatic control line **190** forms a closed circuit.

The control valve **131** may be operatively connected to the pneumatic control system **700.** The pneumatic control system **700** may be configured to control the control valve **131.** In one example, the pneumatic control system **700** may be configured to control said control valve **131** based on an indication to switch from the normal operational mode to the alternate operational mode.

In the depicted example, the control valve **131** is provided as a controllable 3/2 valve but other types of valves or combinations of valves may be envisioned.

As aforementioned the pneumatic control system **700** may be configured to obtain leakage data from one or more pressure and/or flow sensors **S1, S2, S3.**

In the depicted example, a first flow or pressure sensor **S1** is configured to measure the flow or pressure in the first section **HP1.** The first flow or pressure sensor **S1** may thus be arranged at the first section **HP1.** The first flow or pressure sensor **S1** may be configured to measure the flow or pressure in the first section **HP1** downstream of the high pressure branch overflow valve **132.** The leakage data may thus comprise sensor data obtained from said first flow or pressure sensor **S1.**

In the depicted example, a second flow or pressure sensor **S2** is configured to measure the flow or pressure in the first pressure supply section **LPP1.** The second flow or pressure sensor **S2** may thus be arranged at the first pressure supply section **LPP1.** The second flow or pressure sensor **S2** may be configured to measure the flow or pressure in the first pressure supply section **LPP1.**

In the depicted example, a third flow or pressure sensor **S3** is configured to measure the flow or pressure in the second pressure supply section **LPP2.** The third flow or pressure sensor **S3** may thus be arranged at the second pressure supply section **LPP2.** The third flow or pressure sensor **S3** may be configured to measure the flow or pressure in the second pressure supply section **LPP2.**

In one example, the pneumatic control system **700** may be configured to obtain the operational data, e.g. the flow data and/or pressure data from the flow or pressure sensors **S1, S2, S3.**

In **FIG. 3****,** the pneumatic system **100** operates in the normal operational mode, hence there is no leakage present in the downstream portion of the high pressure branch **HP.**

The air compressor **105** provides, when needed, air flow to the pressure circuit **110.** The air compressor **105** may be fluidly connected to an upstream portion of the pressure circuit **110.** The upstream portion of the pressure circuit **110** may be arranged upstream from the low pressure branch **LP** and the high pressure branch **HP.** An air drier **111** and a check valve **112** may be arranged in said upstream portion.

The upstream portion may branch out into the high pressure branch **HP** and the low pressure branch **LP.**

The upstream portion may be fluidly connected to the controllable pressure limiting valve **121.** The low pressure branch **LP** may be arranged downstream of the controllable pressure limiting valve **121.** The first section **HP1** and the second section **HP2** may be arranged as parallel fluid lines branching out from the upstream portion of the pressure circuit **110** upstream from the controllable pressure limiting valve **121.**

The air may be distributed through the first section **HP1,** via the high pressure branch overflow valve **132.** Downstream of the high pressure branch overflow valve **132,** the first section **HP1** may branch out into two sub-branches. A first sub-branch may be in fluid communication with the high pressure air consumer **55,** preferably via a first sub-branch overflow valve **136.** A second sub-branch may be in fluid communication with the high pressure branch tank **51.**

While the pneumatic system **100** operates in the normal operational mode, the control valve arrangement **130,** e.g. the control valve **131,** may be configured to disconnect the second section **HP2** from the exhaust **56.** The second section **HP2** thus forms a blocked passage for the air. Further, in the normal operational mode, the control valve arrangement **130,** e.g. the control valve **131,** may connect the pneumatic control line **190** to the exhaust **56.** This will cause the pneumatic control line **190** to have an atmospheric pressure. The consequent pressure signal from the pneumatic control line **190** to the controllable pressure limiting valve **121** causes the controllable pressure limiting valve **121** to limit the pressure in the low pressure branch **LP** to the initial low pressure level **IL.**

The low pressure branch **LP** may be arranged downstream of the controllable pressure limiting valve **121.** Accordingly, the first and second pressure supply sections **LPP1-2** may be arranged downstream of the controllable pressure limiting valve **121.**

The air may be distributed to the first and second pressure supply section **LPP1-2** towards the low pressure branch tanks **58, 59.** Preferably, a pressure supply section overflow valve **1310, 1311** may be arranged upstream from each low pressure branch tank **58, 59** in each pressure supply section **LPP1-2.**

The low pressure branch **LP** may comprise a consumer portion **LP1.** The consumer portion **LP1** may branch into the one or more low pressure lines **52, 53, 54.** The consumer portion **LP1** may be arranged downstream of the low pressure line pressure limiting valve **122.** The low pressure limiting valve **122** may be configured to limit the pressure in the low pressure lines **52, 53, 54.**

In the depicted example, the low pressure branch **LP** may further comprise an additional portion **171.** The additional portion **171** may be in fluid connection with the with the one or more pressure supply sections **LPP1-2** via a low pressure branch control valve system **170.** The additional portion **171** may be connected to, e.g. in fluid communication with, a control input line of each pressure supply section overflow valve **1310, 1311** of the one or more pressure supply sections **LPP1-2** via said low pressure branch control valve system **170.** The low pressure branch control valve system **170** may be configured to selectively connect the control input line of each pressure supply section overflow valve **1310, 1311** to the exhaust **56** or to the additional portion **171.** In the normal operational mode, the low pressure branch control valve system **170** may be configured to disconnect the control input line of the pressure supply section overflow valve **1310, 1311** from the additional portion **171** and connect said control input line to the exhaust **56.**

The low pressure branch control valve system **170** may be controlled by means of the pneumatic control system **700** to switch to connecting the control input line to the pressure supply section overflow valve **1310, 1311** to the additional portion and to disconnect said control input line from the exhaust **56.** This causes the pressure supply section overflow valve **1310, 1311** of the one or more pressure supply sections **LPP1-2** to close pneumatically, preventing air supply to the one or more low pressure branch tanks **58, 59.** This may for example be performed in response to a detected leakage downstream from the pressure supply section overflow valve **1310, 1311.**

In **FIG. 4****,** a leakage has occurred in the downstream portion of the high pressure branch **HP,** e.g. the first section **HP1.** In **FIG. 4****,** this has been exemplified by a leakage in the high pressure branch tank **51.**

Due to the pressure drop caused by the leakage in the first section **HP1,** the high pressure branch overflow valve **132** will initially close. This causes the first section **HP1** to be sealed off, effectively isolating the leakage. The pressure at the high pressure branch overflow valve **132** may accordingly fall below a closing pressure threshold of said high pressure branch overflow valve **132.**

As a result of the closing of the high pressure branch overflow valve **132** the pressure in the first section **HP1** upstream from said high pressure branch overflow valve **132** can increase until the high pressure branch overflow valve **132** is opened again, e.g. until an opening pressure threshold of the high pressure branch overflow valve **132** is exceeded.

This may be mitigated by the pressure branch overflow valve **132** being connected to the pneumatic control line **190,** the pneumatic control line **190** may thus be configured to pneumatically control the high pressure branch overflow valve **132.** Upon the pneumatic system **100** operating in the alternate operational mode, the pressure provided by the pneumatic control line **190** may cause the high pressure branch overflow valve **132** to remain closed. Hence, the leakage may remain isolated even in the event of the high pressure branch overflow valve **132** being a pneumatically operated valve. In some examples, the high pressure branch overflow valve **132** may instead be configured to be electrically controlled by means of the pneumatic control system **700** to remain closed while the pneumatic system **100** operates in the alternate operational mode.

The leakage may be detected by the sensor **S1,** whereby the leakage data obtained by the pneumatic control system **700** may indicate said leakage. In response, the pneumatic control system **700** may initiate the alternate operational mode. This may be performed by the pneumatic control system **700** controlling the control valve arrangement **130,** e.g. the control valve **131,** to connect the second section **HP2** and the pneumatic control line **190** to form a closed circuit. The resulting increase in pressure in the pneumatic control line **190** causes the controllable pressure limiting valve **121** to allow for the pressure in the low pressure branch **LP** to increase. In one example, the pneumatic control line **190** may provide pneumatic control to the high pressure branch overflow valve **132** in the alternate operational mode, ensuring that the high pressure branch overflow valve **132** remains closed to isolate the leakage.

The increase in pressure in the low pressure branch **LP** may be further ensured by the pneumatic control system **700** controlling the air compressor **105** to increase the air flow into the low pressure branch **LP.**

The increase in pressure in the low pressure branch **LP** and consequently in the pressure supply sections **LPP1-2** allows for the pneumatic system **100** to store the air at a higher pressure in the low pressure branch tanks **58, 59.** The pressurized air in the low pressure branch tanks **58, 59** may then be utilized for high pressure air consumers although there is a leakage in the high pressure branch **HP.**

The increase in air pressure in the pressure supply sections **LPP1-2** may not affect the pressure level in the low pressure lines **72, 73, 74** due to the low pressure line pressure limiting valve **122.** The low pressure line pressure limiting valve **122** may be configured to limit the pressure in the low pressure lines **72, 73, 74** also when the pneumatic system **700** operates in the alternate operational mode. Thereby, the low pressure air consumers **52, 53, 54** may operate at the same low pressure as in the normal operational mode.

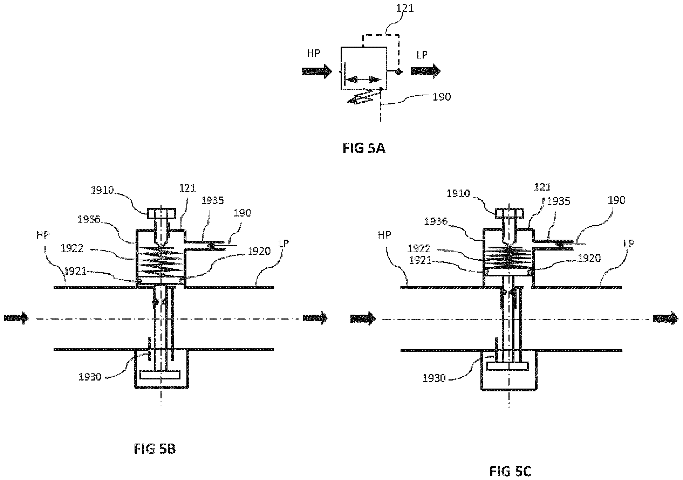

**FIG. 5A-C**depicts the controllable pressure limiting valve **121** in further detail. As aforementioned, the controllable pressure limiting valve **121** may be pneumatically operated. In one example, the details provided with regards to the controllable pressure limiting valve **121** may apply also for the low pressure line pressure limiting valve **122.** It may however be envisioned that the controllable pressure limiting valve **121** is electrically operated according to some examples.

**FIG. 5A** schematically depicts the operation of the pressure limiting valve **121.** The pressure limiting valve **121** may be the pressure limiting valve depicted and described with reference to **FIG. 3-4****.** The pressure limiting valve **121** is in fluid communication with the pneumatic control line **190** and is configured to be controlled based on a control pressure provided via said pneumatic control line **190.**

When the pneumatic system **100** operates in the normal operational mode, the controllable pressure limiting valve **121** may function as a conventional pressure limiting valve, e.g. the controllable pressure limiting valve **121** may be configured to allow air to pass from the high pressure branch **HP** to the low pressure branch **LP** until the pressure in the low pressure branch **LP** has increased up to a certain level. The flow of air through the pressure limiting valve **121** may however be controlled such that the pressure in the low pressure branch **LP** is limited to the aforementioned certain level. In the normal operational mode, the pressure in the pneumatic control line **190** may be at an atmospheric pressure, whereby the pneumatic control line **190** does not affect the operation of the controllable pressure limiting valve.

The pressure in the pneumatic control line **190** will increase when the pneumatic system **100** operates in the alternate operational mode due to the increased pressure in the low pressure branch **LP.** The increased pressure in the low pressure branch **LP** may be caused by the pneumatic control system **700** controlling the air compressor **105.** In response to the increased pressure in the low pressure branch **LP,** the pressure limiting valve **121** will force the controllable pressure limiting valve **121** to enable fluid connection between the low pressure branch **LP** and the high pressure branch **HP.** The increased pressure in the pneumatic control line **190** may thus cause the controllable pressure limiting valve **121** to open, thereby connecting the high pressure branch **HP** from the low pressure branch **LP.** The controllable pressure limiting valve **121** may thus allow for the pressure to increase to a higher level compared to when the pneumatic system **100** operates in the normal operational mode.

**FIG. 5B-C**depicts schematic cross-section views of the pressure limiting valve **121.**

The pressure limiting valve **121** may comprise a spring-loaded valve member **1920.** The spring-loaded valve member **1920** is arranged in a valve seat **1930.** In the depicted example, the pressure limiting valve **121** may comprise a spring **1922.** The spring **1922** may be configured to bias the valve member **1920** relative the valve seat **1930** such that a gap is provided between the valve member **1920** and the valve seat **1930** allowing for air to pass through the pressure limiting valve **121** from the high pressure branch **HP** to the low pressure branch **LP.** If the pressure in the low pressure branch **LP** overcomes the biasing force provided by the spring **1922,** the valve member **1920** may be pressed against the valve seat **1930** such no air is allowed to pass through the valve seat **1930.** The spring **1922** may be mounted by means of a mounting member **1910.**

The pressure limiting valve **121** may comprise a control inlet **1935.** The control inlet **1935** may be configured to be in fluid communication with the pneumatic control line **190.**

The pressure limiting valve **121** may comprise a control chamber **1936.** The control inlet **1935** may be in fluid communication with the control chamber **1936.** The control chamber **1936** may be sealed off by means of the valve member **1920.**

In **FIG. 5B****,** the controllable pressure limiting valve **121** is in an open state.

In the case of the pneumatic system **100** operating in the normal operational mode the controllable pressure limiting valve **121** may operate as follows. The pneumatic control line **190** only provides a relatively low pressure, e.g. an atmospheric pressure, to the control inlet **1935.** The pressure in the control chamber **1936** will as a consequence not be high enough to provide a additional force adding to the biasing force provided by the spring **1922.** A gap may be provided between the valve member **1920** and the valve seat **1930** allowing air to pass from the high pressure circuit **HP** to the low pressure circuit **LP.**

The controllable pressure limiting valve **121** may continue to be in the open state until the pressure in the low pressure branch **LP** is increased to a level high enough to overcome the biasing force provided by the spring **1922** and forces the valve member **1920** against the valve seat **1930,** causing the controllable pressure limiting valve **121** to switch to the closed state.

If pressure decreases in low pressure branch **LP,** for example due to air consumption, the pressure will not be enough to counteract the biasing force provided by the spring **1922** and the valve member **1920** will move out of engagement with the valve seat **1930,** causing the controllable pressure limiting valve **121** to switch to the open state once again.

In the case of the pneumatic system **100** operating in the alternate operational mode, the controllable pressure limiting valve **121** may operate as follows.

The pneumatic control line **190** may, when the pneumatic system **100** operates in the alternate operational mode, provide a relatively high pressure to the control inlet **1935.** The pressure in the control chamber **1936** will thereby be high enough to provide additional force to the biasing force exerted on the valve member **1920.** The additional force provided by the pneumatic control line **190** may be enough to keep the valve member **1920** out of engagement with the valve seat **1930** keeping the controllable pressure valve **121** in the open state. Thereby, the controllable pressure limiting valve **121** allows the pressure level in the low pressure branch **LP** to increase in the alternate operational mode. Hence, the controllable pressure limiting valve **121** may remain in the open state as long as the pneumatic system **100** operates in the alternate operational mode.

In **FIG. 5C****,** the controllable pressure limiting valve is in a closed state. In the case of the pneumatic system **100** operating in the normal operational mode the operation of the controllable pressure limiting valve **121** may be as follows. The pneumatic control line **190** thus provides a relatively low pressure to the control inlet **1935.** The pressure in the control chamber **1936** will thereby be not provide any additional force adding to the biasing force provided by the spring **1922.** Instead, the pressure in the low pressure branch **LP** may be high enough to counteract said biasing force and force the valve member **1920** against the valve seat **1930** causing the controllable pressure limiting valve **121** to operate in the closed state. Hence, the controllable pressure limiting valve **121** may not allow air to pass through the valve seat **1930** to the low pressure branch **LP.**

In the event of the pneumatic system **100** operating in the alternate operational mode, the pressure provided by the pneumatic control line **190** may increase the pressure required in the low pressure branch **LP** required to force the valve member **1920** to engage the valve seat **1930** and operate in the closed state due to said pressure provided by the pneumatic control line **190** adding to the biasing force provided by the spring **1922.**

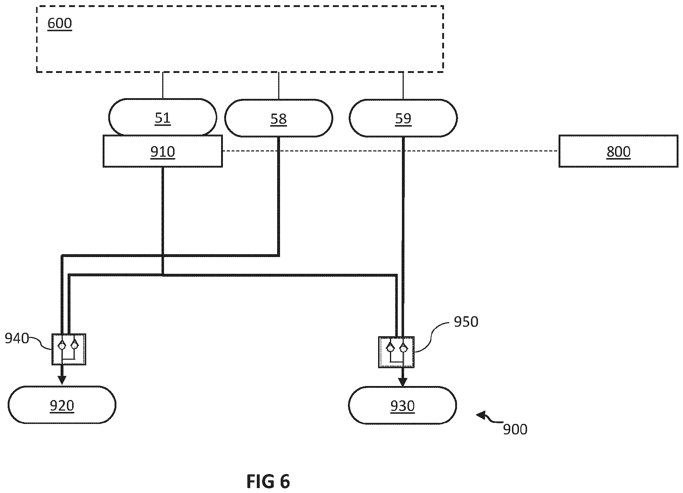

**FIG. 6** depicts additional aspects of the pneumatic system **100** of **FIG. 3-4** according to an example.

As depicted, the pneumatic system **100** may comprise a booster valve **910.** The booster valve **910** may be arranged downstream of the high pressure branch tank **51.** The booster valve **910** may be configured to selectively enable fluid communication between the high pressure branch tank and the pneumatic braking system **900.** In one example, the booster valve **910** may be provided as a solenoid valve.

The booster valve **910** may be configured to be operatively connected to a vehicle control system **800** for controlling said booster valve **910** to selectively enable fluid communication between the high pressure branch tank **51** and the pneumatic braking system **900** for emergency braking of the vehicle **10.** Hence, the booster valve **910** may be configured to be controlled the vehicle control system **800.** In response to receiving an emergency braking instruction from said vehicle control system **800,** the booster valve **910** may be configured to fluidly connect the high pressure branch tank **51** to the pneumatic braking system **900.**

In the depicted example, the pneumatic braking system **900** comprises a front braking arrangement **920** and a rear braking arrangement **930.** The first low pressure branch tank **58** may be configured to supply air to the front braking arrangement **920.** The first low pressure branch tank **58** may be configured to be in fluid communication with the front braking arrangement **58.** The second low pressure branch tank **59** may be configured to supply air to the rear braking arrangement **930.** The second low pressure branch tank **59** may be configured to be in fluid communication with the rear braking arrangement **930.**

A first check valve arrangement **940** may be arranged to control flow from the first low pressure branch tank **58** and the high pressure branch tank **51** to the front braking arrangement **920** and prevent back flow from the front braking arrangement **920** towards the first low pressure branch tank **58** and the high pressure branch tank **51.**

A second check valve arrangement **950** may be arranged to control flow from the second low pressure branch tank **59** and the high pressure branch tank **51** to the rear braking arrangement **930** and prevent back flow from the rear braking arrangement **930** towards the second low pressure branch tank **59** and the high pressure branch tank **51.**

In the depicted example, the pneumatic system **100** may comprise a mechatronic air modulator **600** as described with reference to the previous figures. The mechatronic air modulator **600** may comprise for example an arrangement of valves, sensors and other flow regulation devices configured to supply the one or more low pressure branch tanks **58, 59** and the high pressure branch tank **51** with pressure in an appropriate manner.

In one example, the pneumatic control system **700** may be configured to be operatively connected to the vehicle control system **800.** The pneumatic control system **700** may be configured to obtain operational data associated with the operation of the booster valve **910** from the vehicle control system **800.** In response to the operational data indicating a failure in the booster valve **910,** the pneumatic control system **700** may be configured to cause the pneumatic system **100** to operate in a booster failure mode.

In the booster failure mode, the controllable pressure limiting valve **121** may be configured to cause the pressure level in the low pressure branch **LP** to increase to a pressure level higher than the initial low pressure level **IL.**

A failure in the booster valve **910** may be detected by means of periodic checks against a short circuit, e.g. between a potential and a ground, and an open circuit. This may be performed by means of the vehicle control system **800.** The vehicle control system **800** may thus comprise sensor circuitry configured to perform said periodic check and detecting a failure in the booster valve **910.** Upon detection of the failure, the vehicle control system **800** may provide operational data indicating said failure. Said operational data may thus comprise a failing booster valve indicator. The pneumatic control system **700** may be configured to cause the pneumatic system **100** to operate in the booster failure mode in response to obtaining said failing booster valve indicator.

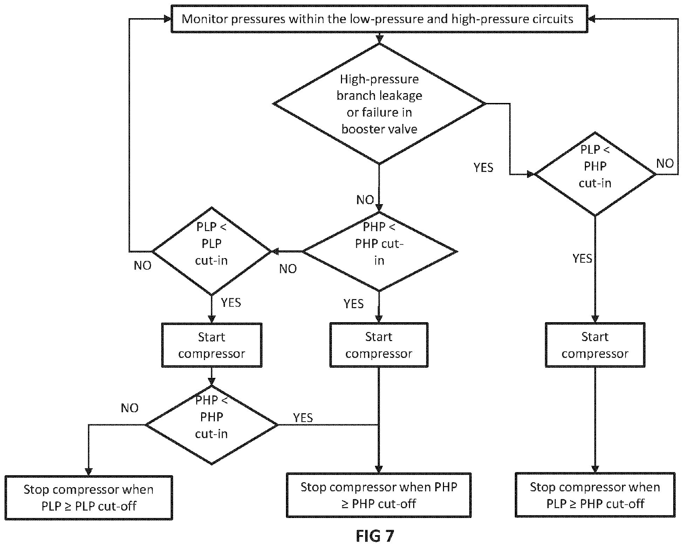

**FIG. 7** depicts a schematic flow chart of the operation of the air compressor **105** in a pneumatic system **100** described with reference to **FIG. 7** according to an example.

The air compressor **105** may be operated in the same manner as described with reference to **FIG. 2C** with regards to the presence of a potential leakage in the high pressure branch **HP.** In the depicted example, data indicating a failing booster valve **910** may be handled in a similar manner as a leakage in the downstream portion of the high pressure branch **HP.**

Accordingly, if a failure in the booster valve **910** is detected and the pneumatic system **100** operates in the booster failure mode, the pneumatic control system **700,** e.g. the processing circuitry **702,** may be configured to start the air compressor **105** in response to the pressure **P_{LP}** in the low pressure branch **LP** being lower than the high pressure branch cut in pressure **P**_{**HP CUT**-**IN**}.

Upon the pressure in the **P_{LP}** in the low pressure branch **LP** exceeding or being at the high pressure branch cut off pressure **P_{HP CUT-OFF}**, the pneumatic control system **700,** e.g. the processing circuitry **702,** may be configured to stop the air compressor **105.**

The functionality provided by the pneumatic control system **700** and operations performed by the pneumatic control system **700** as described with reference **FIG. 1-7** may be performed by a computer system **900.**

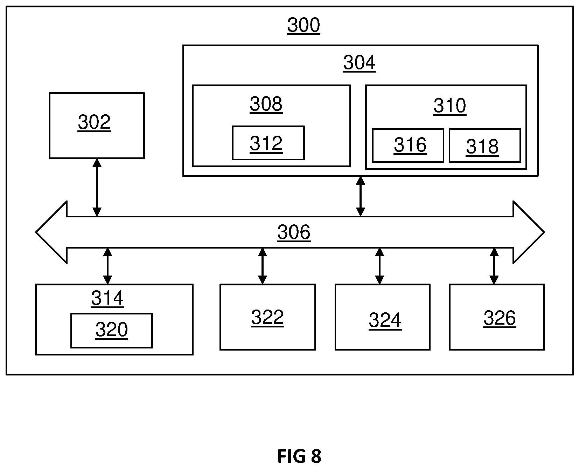

**FIG. 8** is a schematic diagram of a computer system **300** for implementing examples disclosed herein. The computer system **300** is adapted to execute instructions from a computer-readable medium to perform these and/or any of the functions or processing described herein. The computer system **300** may be connected (e.g., networked) to other machines in a LAN, an intranet, an extranet, or the Internet. While only a single device is illustrated, the computer system **300** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **300** may comprise at least one computing device or electronic device capable of including firmware, hardware, and/or executing software instructions to implement the functionality described herein. The computer system **900** may include processing circuitry **302** (e.g., processing circuitry including one or more processor devices or control units), a memory **304,** and a system bus **306.** The computer system **300** may include at least one computing device having the processing circuitry **302.** The system bus **306** provides an interface for system components including, but not limited to, the memory **304** and the processing circuitry **302.** The processing circuitry **302** may include any number of hardware components for conducting data or signal processing or for executing computer code stored in memory **304.** The processing circuitry **302** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **302** may further include computer executable code that controls operation of the programmable device.

The system bus **306** may be any of several types of bus structures that may further interconnect to a memory bus (with or without a memory controller), a peripheral bus, and/or a local bus using any of a variety of bus architectures. The memory **304** may be one or more devices for storing data and/or computer code for completing or facilitating methods described herein. The memory **304** may include database components, object code components, script components, or other types of information structure for supporting the various activities herein. Any distributed or local memory device may be utilized with the systems and methods of this description. The memory **304** may be communicably connected to the processing circuitry **302** (e.g., via a circuit or any other wired, wireless, or network connection) and may include computer code for executing one or more processes described herein. The memory **304** may include non-volatile memory **308** (e.g., read-only memory (ROM), erasable programmable read-only memory (EPROM), electrically erasable programmable read-only memory (EEPROM), etc.), and volatile memory **310** (e.g., random-access memory (RAM)), or any other medium which can be used to carry or store desired program code in the form of machine-executable instructions or data structures and which can be accessed by a computer or other machine with processing circuitry **302.** A basic input/output system (BIOS) **312** may be stored in the non-volatile memory **308** and can include the basic routines that help to transfer information between elements within the computer system **300.**

The computer system **300** may further include or be coupled to a non-transitory computer-readable storage medium such as the storage device **314,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **314** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **314** and/or in the volatile memory **310,** which may include an operating system **316** and/or one or more program modules **318.** All or a portion of the examples disclosed herein may be implemented as a computer program **320** stored on a transitory or non-transitory computer-usable or computer-readable storage medium (e.g., single medium or multiple media), such as the storage device **314,** which includes complex programming instructions (e.g., complex computer-readable program code) to cause the processing circuitry **302** to carry out actions described herein. Thus, the computer-readable program code of the computer program **320** can comprise software instructions for implementing the functionality of the examples described herein when executed by the processing circuitry **302.** In some examples, the storage device **314** may be a computer program product (e.g., readable storage medium) storing the computer program **320** thereon, where at least a portion of a computer program **320** may be loadable (e.g., into a processor) for implementing the functionality of the examples described herein when executed by the processing circuitry **302.** The processing circuitry **302** may serve as a controller or control system for the computer system **300** that is to implement the functionality described herein.

The computer system **300** may include an input device interface **322** configured to receive input and selections to be communicated to the computer system **300** when executing instructions, such as from a keyboard, mouse, touch-sensitive surface, etc. Such input devices may be connected to the processing circuitry **302** through the input device
interface **322** coupled to the system bus **306** but can be connected through other interfaces, such as a parallel port, an Institute of Electrical and Electronic Engineers (IEEE) 1394 serial port, a Universal Serial Bus (USB) port, an IR interface, and the like. The computer system **300** may include an output device interface **324** configured to forward output, such as to a display, a video display unit (e.g., a liquid crystal display (LCD) or a cathode ray tube (CRT)). The computer system **300** may include a communications interface **326** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to an aspect a pneumatic system and vehicle according to any of the following examples may be provided.

Example 1: Pneumatic system (100) for a vehicle comprising an air compressor (**105**) and a pressure circuit (**110**) in fluid communication with the air compressor (**105**), the pressure circuit (**110**) comprising a lower pressure branch (**LP**) and a high pressure branch (**HP**) in fluid communication with each other, the pneumatic system (**100**) further comprising: a controllable pressure limiting valve (**121**) separating the low pressure branch (**LP**) from the high pressure branch (**HP**) and configured to limit the pressure level in the low pressure branch (**LP**) to an initial low pressure level (**IL**) in a normal operational mode, and a control valve arrangement (**130**) arranged in the high pressure branch (**HP**), wherein the pneumatic system (**100**) responsive to a leakage in a downstream portion of the high pressure branch (**HP**) is configured to operate in an alternate operational mode wherein: the control valve arrangement (**130**) is configured to close off said downstream portion of the high pressure branch (**HP**) from the air compressor (**105**) and the controllable pressure limiting valve (**121**) is configured to cause the pressure level in the low pressure branch (**LP**) to increase to a pressure level higher than the initial low pressure level (**IL**).

Example 2: Pneumatic system (**100**) of example 1, further comprising a pneumatic control system (**700**) configured to cause control of the pneumatic system (**100**), wherein the pneumatic control system (**700**) is configured to obtain leakage data indicating leakage in the downstream portion of the high pressure branch (**HP**) and responsive to the leakage data indicating leakage in said downstream portion cause the pneumatic system (**100**) to operate in the alternate operational mode.

Example 3: Pneumatic system (**100**) of example 1 or 2, further configured to in the normal operational mode cause the high pressure branch (**HP**) to operate at an initial high pressure level (**HL**) and wherein the initial low pressure level (**IL**) is lower than the initial high pressure level (**HL**).

Example 4: Pneumatic system (**100**) of example 2 or 3, wherein the pneumatic control system (**700**) is further configured to: obtain operational data associated with the pressure and/or flow in the high pressure branch (**HP**), and based on the operational data and responsive to the leakage data indicating leakage in the high pressure branch (**HP**) cause control of the air compressor (**105**) such that the pressure in the low pressure branch (**LP**) reaches the initial high pressure level (**HL**) in the alternate operational mode.

Example 5: Pneumatic system (**100**) of any of examples 1-4, wherein the pressure circuit (**110**) further comprises one or more low pressure lines (**72, 73, 74**) arranged downstream from the low pressure branch (**LP**) each being configured to be in fluid communication with a low pressure air consumer (**52, 53, 54**) such as a vehicle auxiliary, a trailer, a gearbox or a parking brake system, to provide air pressure to said low pressure air consumer (**52, 53, 54**).

Example 6: Pneumatic system (**100**) of example 5, further comprising: at least one low pressure line pressure limiting valve (**122**) separating the one or more low pressure lines (**72, 73, 74**) from the low pressure branch (**LP**) and configured to limit the pressure level in the one or more low pressure lines (**72, 73, 74**) relative to the low pressure branch (**LP**).

Example 7: Pneumatic system (**100**) of any of examples 1-6, wherein the low pressure branch (**LP**) comprises one or more pressure supply sections (**LPP**) each fluidly connected to a low pressure branch tank (**58, 59**) for storing the air at the pressure level at which the low pressure branch (**LP**) operates.

Example 8: Pneumatic system (**100**) of any of examples 1-7, wherein the controllable pressure limiting valve (**121**) is pneumatically operable.

Example 9: Pneumatic system (**100**) of any of examples 1-8, further comprising a high pressure air consumer (**55**) such as an air suspension system of the vehicle (**1**) and/or an emergency braking function of a pneumatic braking system (**900**) of the vehicle (**1**), wherein the downstream portion of the high pressure branch (**HP**) is fluidly connected to said high pressure air consumer (**55**) to provide air pressure to said high pressure air consumer (**55**).

Example 10: Pneumatic system (**100**) of any of examples 1-9, wherein the downstream portion of the high pressure branch (**HP**) comprises a first section (**HP1**) of said high pressure branch (**HP**) arranged upstream from the controllable pressure limiting valve (**121**).

Example 11: Pneumatic system (**100**) of example 10, wherein the high pressure branch (**HP**) further comprises a second section (**HP2**) arranged upstream from the controllable pressure limiting valve (**121**) and wherein the control valve arrangement (**130**) is configured to close off the first section (**HP1**) from the air compressor (**105**) and fluidly connect the second section (**HP2**) to a pneumatic control line (**190**) fluidly connected to the controllable pressure limiting valve (**121**) for sending a pneumatic signal to said pressure limiting valve (**121**) to cause the pressure level in the low pressure branch (**LP**) to increase to a pressure level higher than the initial low pressure level (**IL**) in the alternate operational mode.

Example 12: Pneumatic system (**100**) of example 11, wherein an exhaust (**56**) of the pneumatic system (**100**) is arranged downstream of the control valve arrangement (**130**) and wherein said control valve arrangement (**130**) is configured to selectively fluidly connect the pneumatic control line (**190**) to said exhaust (**56**).

Example 13: Pneumatic system (**100**) of example 12, wherein the control valve arrangement (**130**) is configured to connect the pneumatic control line (**190**) to an atmospheric pressure via the exhaust (**56**) in the normal operational mode and close off the pneumatic control line (**190**) from the exhaust (**56**) and connect the second section (**HP2**) to the pneumatic control line (**190**) such that said second section (**HP2**) and pneumatic control line (**190**) form a closed circuit in the alternate operational mode.

Example 14: Pneumatic system (**100**) of any of examples 1-13, wherein the control valve arrangement (**130**) comprises a high pressure branch overflow valve (**132**) configured to close to seal off the downstream portion of the high pressure branch (**HP**) responsive to the pressure in said downstream portion falling below an overflow pressure limit.

Example 15: Pneumatic system (**100**) of any of examples 13-14, wherein the control valve arrangement (**130**) comprises a control valve (**131**) configured to connect the pneumatic control line (**190**) to an atmospheric pressure via the exhaust (**56**) in the normal operational mode and close off the pneumatic control line (**190**) from the exhaust (**56**) and connect the second section (**HP2**) to the pneumatic control line (**190**) such that said second section (**HP2**) and pneumatic control line (**190**) form a closed circuit in the alternate operational mode, wherein the control valve (**131**) is operatively connected to the pneumatic control system (**700**) and the pneumatic control system (**700**) is configured to cause control of said control valve (**131**).

Example 16: Pneumatic system (**100**) of any of examples 2-15, wherein the pneumatic control system (**700**) is configured to obtain leakage data from one or more pressure and/or flow sensors (**S1, S2, S3**).

Example 17: Pneumatic system (**100**) of any of examples 1-16, further comprising a high pressure branch tank (**51**) for storing pressurized air for emergency braking, wherein the downstream portion of the high pressure branch (**HP**) is fluidly connected to the high pressure branch tank (**51**) to provide air pressure to said high pressure branch tank and wherein the low pressure branch (**LP**) comprises one or more pressure supply sections (**LPP**) each fluidly connected to a low pressure branch tank (**58, 59**) for storing the air at the pressure level at which the low pressure branch (**LP**) operates, and wherein the high pressure branch tank (**51**) and the one or more low pressure branch tank (**58, 59**) are configured to be fluidly connected to a pneumatic braking system (**900**) of the vehicle to supply air for the operation of said pneumatic braking system (**900**).

Example 18: Pneumatic system (**100**) of example 17, further comprising a booster valve (**910**) arranged downstream of the high pressure branch tank (**51**) and configured to selectively enable fluid communication between the high pressure branch tank (**51**) and the pneumatic braking system (**900**), wherein the booster valve (**910**) is configured to be operatively connected to a vehicle control system (**800**) for controlling said booster valve (**910**) to selectively enable fluid communication between the high pressure branch tank and the pneumatic braking system (**900**) for emergency braking of the vehicle (**10**).

Example 19: Pneumatic system (**100**) of example 18, wherein the pneumatic control system (**700**) is configured to be operatively connected to the vehicle control system (**800**) and wherein the pneumatic control system (**700**) is configured to obtain operational data associated with the operation of the booster valve (**910**) from said vehicle control system (**800**) and responsive to said operational data indicating a failure in the booster valve (**910**), the pneumatic control system (**700**) is configured to cause the pneumatic system (**100**) to operate in a booster failure mode wherein: the controllable pressure limiting valve (**121**) is configured to cause the pressure level in the low pressure branch (**LP**) to increase to a pressure level higher than the initial low pressure level (**IL**).

Example 20: A vehicle comprising a pneumatic system (**100**) of any of examples 1-19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. Pneumatic system (**100**) for a vehicle comprising an air compressor (**105**) and a pressure circuit (**110**) in fluid communication with the air compressor (**105**), the pressure circuit (**110**) comprising a lower pressure branch (**LP**) and a high pressure branch (**HP**) in fluid communication with each other,
the pneumatic system (**100**) further comprising:
a controllable pressure limiting valve (**121**) separating the low pressure branch (**LP**) from the high pressure branch (**HP**) and configured to limit the pressure level in the low pressure branch (**LP**) to an initial low pressure level (**IL**) in a normal operational mode, and
a control valve arrangement (**130**) arranged in the high pressure branch (**HP**),
wherein the pneumatic system (**100**) responsive to a leakage in a downstream portion of the high pressure branch (**HP**) is configured to operate in an alternate operational mode wherein: the control valve arrangement (**130**) is configured to close off said downstream portion of the high pressure branch (**HP**) from the air compressor (**105**) and the controllable pressure limiting valve (**121**) is configured to cause the pressure level in the low pressure branch (**LP**) to increase to a pressure level higher than the initial low pressure level (**IL**).

2. Pneumatic system (**100**) of claim 1, further comprising a pneumatic control system (**700**) configured to cause control of the pneumatic system (**100**), wherein the pneumatic control system (**700**) is configured to obtain leakage data indicating leakage in the downstream portion of the high pressure branch (**HP**) and responsive to the leakage data indicating leakage in said downstream portion cause the pneumatic system (**100**) to operate in the alternate operational mode.

3. Pneumatic system (**100**) of claim 1 or 2, further configured to in the normal operational mode cause the high pressure branch (**HP**) to operate at an initial high pressure level (**HL**) and wherein the initial low pressure level (**IL**) is lower than the initial high pressure level (**HL**).

4. Pneumatic system (**100**) of claim 2 or 3, wherein the pneumatic control system (**700**) is further configured to:
obtain operational data associated with the pressure and/or flow in the high pressure branch (**HP**), and
based on the operational data and responsive to the leakage data indicating leakage in the high pressure branch (**HP**) cause control of the air compressor (**105**) such that the pressure in the low pressure branch (**LP**) reaches the initial high pressure level (**HL**) in the alternate operational mode.

5. Pneumatic system (**100**) of any of claims 1-4, wherein the pressure circuit (**110**) further comprises one or more low pressure lines (**72, 73, 74**) arranged downstream from the low pressure branch (**LP**) each being configured to be in fluid communication with a low pressure air consumer (**52, 53, 54**) such as a vehicle auxiliary, a trailer, a gearbox or a parking brake system, to provide air pressure to said low pressure air consumer (**52, 53, 54**).

6. Pneumatic system (**100**) of any of claims 1-5, wherein the controllable pressure limiting valve (**121**) is pneumatically operable.

7. Pneumatic system (**100**) of any of claims 1-6, further comprising a high pressure air consumer (**55**) such as an air suspension system of the vehicle (**1**) and/or an emergency braking function of a pneumatic braking system (**900**) of the vehicle (**1**), wherein the downstream portion of the high pressure branch (**HP**) is fluidly connected to said high pressure air consumer (**55**) to provide air pressure to said high pressure air consumer (**55**).

8. Pneumatic system (**100**) of any of claims 1-7, wherein the downstream portion of the high pressure branch (**HP**) comprises a first section (**HP1**) of said high pressure branch (**HP**) arranged upstream from the controllable pressure limiting valve (**121**).

9. Pneumatic system (**100**) of claim 8, wherein the high pressure branch (**HP**) further comprises a second section (**HP2**) arranged upstream from the controllable pressure limiting valve (**121**) and wherein the control valve arrangement (**130**) is configured to close off the first section (**HP1**) from the air compressor (1**0**5) and fluidly connect the second section '(**HP2**) to a pneumatic control line (**190**) fluidly connected to the controllable pressure limiting valve (**121**) for sending a pneumatic signal to said pressure limiting valve (**121**) to cause the pressure level in the low pressure branch (**LP**) to increase to a pressure level higher than the initial low pressure level (**IL**) in the alternate operational mode.

10. Pneumatic system (**100**) of claim 9, wherein an exhaust (**56**) of the pneumatic system (**100**) is arranged downstream of the control valve arrangement (**130**) and wherein said control valve arrangement (**130**) is configured to selectively fluidly connect the pneumatic control line (**190**) to said exhaust (**56**).

11. Pneumatic system (**100**) of any of claims 10, wherein the control valve arrangement (**130**) comprises a control valve (**'**) configured to connect the pneumatic control line (**190**) to an atmospheric pressure via the exhaust (**56**) in the normal operational mode and close off the pneumatic control line (**190**) from the exhaust (**56**) and connect the second section (**HP2**) to the pneumatic control line (**190**) such that said second section (**HP2**) and pneumatic control line (**190**) form a closed circuit in the alternate operational mode, wherein the control valve (**131**) is operatively connected to the pneumatic control system (**700**) and the pneumatic control system (**700**) is configured to cause control of said control valve (**131**).

12. Pneumatic system (**100**) of any of claims 1-11, further comprising a high pressure branch tank (**51**) for storing pressurized air for emergency braking, wherein the downstream portion of the high pressure branch (**HP**) is fluidly connected to the high pressure branch tank (**51**) to provide air pressure to said high pressure branch tank and wherein the low pressure branch (**LP**) comprises one or more pressure supply sections (**LPP**) each fluidly connected to a low pressure branch tank (**58, 59**) for storing the air at the pressure level at which the low pressure branch (**LP**) operates, and
wherein the high pressure branch tank (**51**) and the one or more low pressure branch tank (**58, 59**) are configured to be fluidly connected to a pneumatic braking system (**900**) of the vehicle to supply air for the operation of said pneumatic braking system (**900**).

13. Pneumatic system (**100**) of claim 12, further comprising a booster valve (**910**) arranged downstream of the high pressure branch tank (**51**) and configured to selectively enable fluid communication between the high pressure branch tank (**51**) and the pneumatic braking system (**900**), wherein the booster valve (**910**) is configured to be operatively connected to a vehicle control system (**800**) for controlling said booster valve (**910**) to selectively enable fluid communication between the high pressure branch tank and the pneumatic braking system (**900**) for emergency braking of the vehicle (**10**)**.**

14. Pneumatic system (**100**) of claim 13, wherein the pneumatic control system (**700**) is configured to be operatively connected to the vehicle control system (**800**) and wherein the pneumatic control system (**700**) is configured to obtain operational data associated with the operation of the booster valve (**910**) from said vehicle control system (**800**) and responsive to said operational data indicating a failure in the booster valve (**910**), the pneumatic control system (**700**) is configured to cause the pneumatic system (**100**) to operate in a booster failure mode wherein:
the controllable pressure limiting valve (**121**) is configured to cause the pressure level in the low pressure branch (**LP**) to increase to a pressure level higher than the initial low pressure level (**IL**).

15. A vehicle comprising a pneumatic system (**100**) of any of claims 1-14.
